# EUROPEAN PATENT APPLICATION

(11) **EP 4 628 542 A1**
(43) Date of publication of application: **08.10.2025**
(21) Application number: 23898174.0
(22) Date of filing: 21.11.2023
(51) Int. Cl.: C08L 69/00, C08L 67/02, C08L 55/02, C08L 25/10, C08K 5/49, C08K 5/1515

(54) **RECYCLED THERMOPLASTIC RESIN COMPOSITION, AND MOLDED ARTICLE PRODUCED THEREFROM**

(30) Priority: 29.11.2022 KR 20220162179
(71) Applicant: LOTTE CHEMICAL CORPORATION, Seoul 05551 (KR)
(72) Inventor: LEE, Su Yeon, Uiwiang-si Gyeonggi-do 16073 (KR); KANG, Tae Gon, Uiwiang-si Gyeonggi-do 16073 (KR); CHOI, Dong Kil, Uiwiang-si Gyeonggi-do 16073 (KR)
(74) Representative: Germain Maureau
(86) International application number: PCT/KR2023/018757
(87) International publication number: WO 2024/117643

(57) **Abstract**

A recycled thermoplastic resin composition of the present invention comprises: about 100 parts by weight of a recycled thermoplastic resin comprising about 80-99% by weight of a recycled polycarbonate resin and about 1-20% by weight of a recycled polyester resin recovered within 50 km from the coastline; about 0.5-20 parts by weight of a rubber-modified aromatic vinyl copolymer resin; about 10-30 parts by weight of a phosphorus-based flame retardant; and about 0.1-1 part by weight of an epoxy ester compound containing an ester group and an epoxy group. The recycled thermoplastic resin composition is excellent in impact resistance, fluidity, flame retardancy, thermal stability, appearance characteristics, heat resistance, chemical resistance, and balance between these properties.

## Description

### [Technical Field]

The present invention relates to a recycled thermoplastic resin composition and a molded article produced therefrom. More particularly, the present invention relates to a recycled thermoplastic resin composition that has good properties in terms of impact resistance, fluidity, flame retardancy, thermal stability, external appearance, heat resistance, chemical resistance, property balance therebetween, and the like, and a molded article produced therefrom.

### [Background Art]

Following the passage of legislation to reduce marine plastic pollution in the United States and Europe, there is increasing demand for eco-friendly materials from global companies. As a result, products with a high content of various recycled materials have been developed as eco-friendly materials. For example, in 2021, Ocean Bound Plastic (OBP) PET (recycled PET recovered from within 50 kilometers of the coastline) was applied to products as a recycled raw material, and in 2022, IT electronic device models required use of recycled polycarbonate resins (ITE-PCM PC) collected from Information Technology Electronics (ITE), such as mobile phones, laptops, and desktops that are difficult to recycle, in addition to typical OBP PET resins and typical recycled polycarbonate resins (R-PCs) collected from sheets, water bottles, and the like. In particular, as points can be given to application of ITE derived Post Customer Materials (ITE-PCM) in the revision of EPEAT (U.S. Electrical and Electronic Product Environmental Assessment), there is increasing demand for application of ITE-PCM.

However, since most recycled materials are processed multiple times and have unclear origin, application of a high content of recycled materials can cause problems, such as degradation of thermoplastic resins obtained from the recycled materials and property deterioration of materials (thermoplastic resin composition and molded products) can occur, even if the recycled materials are cleaned before warehousing. In particular, OBP (Ocean Bound Plastic) PET and ITE-PCM PC originated from coastal sand and electronic device parts contain a large amount of inorganic metals and foreign substances, causing degradation of polymer resins and a high probability of degradation in properties of recycled plastics when applied in an excess amount.

Therefore, there is a need to develop a recycled thermoplastic resin composition that has good properties in terms of impact resistance, fluidity, flame retardancy, thermal stability, external appearance, heat resistance, chemical resistance, property balance therebetween, and the like.

The background technique of the present invention is disclosed in Korean Patent Laid-open Publication No. 10-2016-0130701 and the like.

### [Disclosure]

### [Technical Problem]

It is one object of the present invention to provide a recycled thermoplastic resin composition having good properties in terms of impact resistance, fluidity, flame retardancy, thermal stability, external appearance, heat resistance, chemical resistance, property balance therebetween, and the like.

It is another object of the present invention to provide a molded article produced from the recycled thermoplastic resin composition.

The above and other objects of the present invention can be achieved by embodiments of the present invention described below.

### [Technical Solution]

1. One aspect of the present invention relates to a recycled thermoplastic resin composition. The recycled thermoplastic resin composition comprises: about 100 parts by weight of a recycled thermoplastic resin comprising about 80 wt% to about 99 wt% of a recycled polycarbonate resin and about 1 wt% to about 20 wt% of a recycled polyester resin recovered from within 50 km of a coastline; about 0.5 parts by weight to about 20 parts by weight of a rubber-modified aromatic vinyl copolymer resin; about 10 parts by weight to about 30 parts by weight of a phosphorus flame retardant; and about 0.1 parts by weight to about 1 part by weight of an epoxy ester compound containing an ester group and an epoxy group.
2. In embodiment 1, the recycled polycarbonate resin may comprise about 30 wt% or more of a recycled polycarbonate resin recovered from IT electronics (ITE-PCM PC) based on 100 wt% of the total recycled polycarbonate resin.
3. In embodiment 1 or 2, the recycled polycarbonate resin may contain about 0.01 wt% to about 0.5 wt% of metallic minerals.
4. In embodiments 1 to 3, the recycled polyester resin may comprise at least one of ocean bound plastic (OBP) polyethylene terephthalate, OBP polybutylene terephthalate, and OBP polycyclohexylenedimethylene terephthalate.
5. In embodiments 1 to 4, the rubber-modified aromatic vinyl copolymer resin may comprise a rubber-modified vinyl graft copolymer and an aromatic vinyl copolymer resin.
6. In embodiments 1 to 5, the rubber-modified vinyl graft copolymer may be prepared through graft polymerization of a monomer mixture comprising an aromatic vinyl monomer and a vinyl cyanide monomer to a rubber polymer.
7. In embodiments 1 to 6, the phosphorus flame retardant may comprise at least one of a phosphate compound, a phosphonate compound, a phosphinate compound, a phosphine oxide compound, and a phosphazene compound.
8. In embodiments 1 to 7, the epoxy ester compound containing an ester group and an epoxy group may be a compound represented by Formula 1:

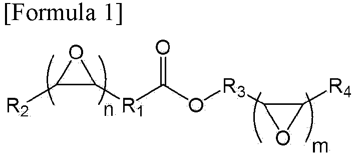

   where R₁ and R₃ are each independently a C₁ to C₁₀ hydrocarbon group, R₂ and R₄ are each independently a hydrogen atom or a C₁ to C₁₀ hydrocarbon group, m and n are 0 or 1, and m+n is 1 or 2. Here, R₁ and R₂ and R₃ and R₄ may be linked to each other to form a ring.
9. In embodiments 1 to 8, the recycled thermoplastic resin composition may have a notched Izod impact strength of about 5 kgf·cm/cm to about 40 kgf·cm/cm, as measured on a 1/8" thick specimen in accordance with ASTM D256.
10. In embodiments 1 to 9, the recycled thermoplastic resin composition may have a melt-flow index (MI) of about 10 g/10 min to about 45 g/10 min, as measured at 260°C under a load of 2.16 kgf in accordance with ASTM D1238.
11. In embodiments 1 to 10, the recycled thermoplastic resin composition may have a flame retardancy of V-0 or higher, as measured on a 1.5 mm thick specimen by a UL-94 vertical test method.
12. In embodiments 1 to 11, the recycled thermoplastic resin composition may have a glass plate weight gain of about 0.01% to about 0.5%, as calculated according to Equation 1, after 2 g of a specimen prepared in pellet form of the recycled thermoplastic resin composition is placed in a glass petri dish having a diameter of 80 mm and the top of the glass petri dish is covered with a glass plate, followed by heating the glass petri dish on a hot plate at 270°C for 2 hours. Glass plate weight gain (%) = (glass plate weight after heating for 2 hours - initial glass plate weight) × 100
13. In embodiments 1 to 12, the recycled thermoplastic resin composition may have a Vicat softening temperature (VST) of about 80°C to about 120°C, as measured in accordance with the ISO 306 evaluation method (B/50).
14. Another aspect of the present invention relates to a molded article. The molded article is produced from the recycled thermoplastic resin composition according to any one of embodiments 1 to 13.

### [Advantageous Effects]

The present invention provides a thermoplastic resin composition having good properties in terms of impact resistance, fluidity, flame retardancy, thermal stability, external appearance, heat resistance, chemical resistance, property balance therebetween, and the like, and a molded article produced therefrom.

### [Best Mode]

Hereinafter, embodiments of the present invention will be described in detail.

A recycled thermoplastic resin composition according to the present invention comprises: (A) a recycled thermoplastic resin comprising (A1) a recycled polycarbonate resin; (A2) a recycled polyester resin; (B) a rubber-modified aromatic vinyl copolymer resin; (C) a phosphorus flame retardant; and (D) an epoxy ester compound.

As used herein to represent a specific numerical range, "a to b" is defined as "≥a and ≤b".

### (A) Recycled thermoplastic resin

The recycled thermoplastic resin according to the present invention comprises (A1) a recycled polycarbonate resin; and (A2) a recycled polyester resin.

### (A1) Recycled polycarbonate resin

The recycled polycarbonate resin according to one embodiment of the present invention is an environmentally friendly material and may comprise any typical recycled polycarbonate resins without limitation. For example, the recycled polycarbonate resin may comprise post-consumer material PC (PCM PC) recovered from sheets, water bottles, and the like, post-consumer material PC (PCM PC) recovered from IT electronics (ITE-PCM PC), and combinations thereof.

In some embodiments, the recycled polycarbonate resin may comprise about 30 wt% or more, for example, about 35 wt% to about 95 wt%, of a recycled polycarbonate resin recovered from IT electronics (ITE-PCM PC), based on 100 wt% of the total recycled polycarbonate resin. In addition, the recycled polycarbonate resin may comprise less than about 70 wt%, for example, about 5 wt% to about 65 wt%, of post-consumer material PC (PCM PC) collected from sheets, water bottles, and the like, based on 100 wt% of the total recycled polycarbonate resin. Within these ranges, the recycled thermoplastic resin composition can have better properties in terms of impact resistance, flame retardancy, environmental friendliness, and the like.

In some embodiments, the recycled polycarbonate resin may have a weight average molecular weight (Mw) of about 10,000 g/mol to about 200,000 g/mol, for example, about 20,000 g/mol to about 50,000 g/mol, as measured by gel permeation chromatography (GPC). Within this range, the recycled thermoplastic resin composition can have good properties in terms of impact resistance, fluidity (processability), and the like.

In some embodiments, metallic minerals, such as calcium (Ca), iron (Fe), and the like, may be present in an amount of about 0.01 wt% to about 0.5 wt%, for example, about 0.05 wt% to about 0.3 wt%, in the recycled polycarbonate. Within this range, the recycled thermoplastic resin composition can have good impact resistance, flame retardancy, and the like.

In some embodiments, the recycled polycarbonate resin may be present in an amount of about 80 wt% to about 99 wt%, for example, about 85 wt% to about 95 wt%, based on 100 wt% of the total recycled thermoplastic resin. If the content of the recycled polycarbonate resin is less than about 80 wt% based on 100 wt% of the total recycled thermoplastic resin, the recycled thermoplastic resin composition can suffer from deterioration in impact resistance, flame retardancy, environmental friendliness, and the like, and if the content of the recycled polycarbonate resin exceeds about 99 wt%, the recycled thermoplastic resin composition can suffer from deterioration in chemical resistance and the like.

### (A2) Recycled polyester resin

The recycled polyester resin according to one embodiment of the present invention is an environmentally friendly material and comprises a recycled polyester resin recovered from within 50 km of a coastline.

In some embodiments, the recycled polyester resin may comprise ocean bound plastic (OBP) polyethylene terephthalate (PET), OBP polybutylene terephthalate (PBT), OBP polycyclohexylenedimethylene terephthalate (PCT), OBP polyethylene naphthalate (PEN), OBP polytrimethylene terephthalate (PTT), combinations thereof, and the like. Preferably, the recycled polyester resin comprises OBP polyethylene terephthalate, OBP polybutylene terephthalate, and OBP polycyclohexylenedimethylene terephthalate, combinations thereof, and the like.

In some embodiments, the recycled polyester resin may have an intrinsic viscosity [η] of about 0.5 dl/g to about 1.5 dl/g, for example, about 0.7 dl/g to about 1.3 dl/g, as measured in accordance with ASTM D2857. Within this range, the recycled thermoplastic resin composition can exhibit good flowability, molding processability, and the like.

In some embodiments, the recycled polyester resin may be present in an amount of about 1 wt% to about 20 wt%, for example, about 3 wt% to about 15 wt%, based on 100 wt% of the total recycled thermoplastic resin. If the content of the recycled polyester resin is less than about 1 wt% based on 100 wt% of the total recycled thermoplastic resin, the recycled thermoplastic resin composition can suffer from deterioration in chemical resistance, and if the content of the recycled polyester resin exceeds about 20 wt%, the recycled thermoplastic resin composition can suffer from deterioration in impact resistance, flame retardancy, and the like.

### (B) Rubber-modified aromatic vinyl copolymer resin

The rubber-modified aromatic vinyl copolymer resin according to one embodiment of the present invention serves to improve impact resistance, fluidity, flame retardancy, thermal stability, external appearance, heat resistance, chemical resistance, property balance therebetween, and the like of the recycled thermoplastic resin composition, when applied to the recycled thermoplastic resin together with the phosphorus flame retardant and the epoxy ester compound, and may comprise (B1) a rubber-modified vinyl graft copolymer and (B2) an aromatic vinyl copolymer resin.

### (B1) Rubber-modified vinyl graft copolymer

The rubber-modified vinyl graft copolymer according to one embodiment of the present invention may be prepared through graft polymerization of a monomer mixture comprising an aromatic vinyl monomer and a monomer copolymerizable with the aromatic vinyl monomer to a rubber polymer. For example, the rubber-modified vinyl graft copolymer may be prepared through graft polymerization of a monomer mixture comprising an aromatic vinyl monomer and a monomer copolymerizable with the aromatic vinyl monomer, such as a vinyl cyanide monomer, a monomer for imparting processability and heat resistance, or a combination thereof, to a rubber polymer. Polymerization may be performed by any suitable polymerization methods well-known in the art, such as emulsion polymerization, suspension polymerization, and the like. Furthermore, the rubber-modified vinyl graft copolymer may form a core (rubber polymer)-shell (copolymer of the monomer mixture) structure, without being limited thereto.

**In** some embodiments, the rubber polymer may comprise, for example, diene rubbers, such as polybutadiene, poly(acrylonitrile-butadiene), and the like, saturated rubbers obtained by adding hydrogen to the diene rubbers, isoprene rubbers, C₂ to C₁₀ alkyl (meth)acrylate rubbers, copolymers of C₂ to C₁₀ alkyl (meth)acrylates and styrene, ethylene-propylene-diene terpolymer (EPDM), and the like. These may be used alone or as a mixture thereof. For example, diene rubbers, (meth)acrylate rubbers, and the like, more specifically, butadiene rubbers, butyl acrylate rubbers, and the like, may be used as the rubber polymer.

**In** some embodiments, the rubber polymer (rubber particles) may have an average particle size of about 0.05 µm to about 6 µm, for example, about 0.15 µm to about 4 µm, specifically about 0.25 µm to about 3.5 µm. Within this range, the recycled thermoplastic resin composition can have good properties in terms of impact resistance, external appearance, and the like. Here, the average (z-average) particle diameter of the rubber polymer (rubber particles) may be measured by a light scattering method in a latex state. Specifically, a rubber polymer latex is filtered through a mesh to remove coagulum generated during polymerization of the rubber polymer, followed by placing a mixed solution of 0.5 g of the latex and 30 ml of distilled water in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Nano-zs, Malvern Co., Ltd.).

In some embodiments, the rubber polymer may be present in an amount of about 20 wt% to about 80 wt%, for example, about 25 wt% to about 70 wt%, based on 100 wt% of the rubber-modified vinyl graft copolymer, and the monomer mixture may be present in an amount of about 20 wt% to about 80 wt%, for example, about 30 wt% to about 75 wt%, based on 100 wt% of the rubber-modified vinyl graft copolymer. Within these ranges, the recycled thermoplastic resin composition can have good properties in terms of impact resistance, heat resistance, processability, external appearance, and the like.

In some embodiments, the aromatic vinyl monomer may be graft copolymerizable with the rubber polymer and may comprise, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like, without being limited thereto. These may be used alone or as a mixture thereof. The aromatic vinyl monomer may be present in an amount of about 10 wt% to about 90 wt%, for example, about 20 wt% to about 80 wt%, based on 100 wt% of the monomer mixture. Within this range, the recycled thermoplastic resin composition can have good processability, impact resistance, and the like.

In some embodiments, the vinyl cyanide monomer is copolymerizable with the aromatic vinyl monomer and may comprise, for example, acrylonitrile, methacrylonitrile, ethacrylonitrile, phenylacrylonitrile, α-chloroacrylonitrile, fumaronitrile, and the like. These may be used alone or as a mixture thereof. For example, acrylonitrile, methacrylonitrile, and the like may be used as the vinyl cyanide monomer. Furthermore, the monomer for imparting processability and heat resistance may comprise (meth)acrylic acid, C₁ to C₁₀ alkyl (meth)acrylates, maleic anhydride, N-substituted maleimide, and the like.

**In** some embodiments, the rubber-modified vinyl graft copolymer may comprise, for example, a copolymer (g-ABS) prepared by grafting a styrene monomer as the aromatic vinyl compound and an acrylonitrile monomer as the vinyl cyanide compound to a butadiene rubber polymer, a copolymer (g-MBS) prepared by grafting a styrene monomer as the aromatic vinyl compound and methyl methacrylate as the monomer for imparting processability and heat resistance to a butadiene rubber polymer, a copolymer (g-MABS) prepared by grafting a styrene monomer, an acrylonitrile monomer and methyl methacrylate to a butadiene rubber polymer, an acrylate-styrene-acrylonitrile graft copolymer (g-ASA) prepared by grafting a styrene monomer as the aromatic vinyl compound and an acrylonitrile monomer as the vinyl cyanide compound to a butyl acrylate rubber polymer, and the like. For example, g-ABS, g-MBS and the like may be used.

**In** some embodiments, the rubber-modified vinyl graft copolymer may be present in an amount of about 20 wt% to about 80 wt%, for example, about 25 wt% to about 75 wt%, based on 100 wt% of the rubber-modified aromatic vinyl copolymer resin. Within this range, the recycled thermoplastic resin composition can have good impact resistance, chemical resistance, and the like.

### (B2) Aromatic vinyl copolymer resin

The aromatic vinyl copolymer resin according to one embodiment of the present invention may be an aromatic vinyl copolymer resin used in typical rubber-modified aromatic vinyl copolymer resins. For example, the aromatic vinyl copolymer resin may be a polymer of a monomer mixture comprising an aromatic vinyl monomer and a monomer copolymerizable with the aromatic vinyl monomer.

**In** some embodiments, the aromatic vinyl copolymer resin may be prepared by mixing the aromatic vinyl monomer with the monomer copolymerizable with the aromatic vinyl monomer, followed by polymerization of the mixture. Here, polymerization may be performed by any suitable polymerization method well-known in the art, such as emulsion polymerization, suspension polymerization, and the like.

In some embodiments, the aromatic vinyl monomer may comprise, for example, styrene, α-methylstyrene, β-methylstyrene, p-methylstyrene, p-t-butylstyrene, ethylstyrene, vinyl xylene, monochlorostyrene, dichlorostyrene, dibromostyrene, vinyl naphthalene, and the like. These may be used alone or as a mixture thereof. The aromatic vinyl monomers may be present in an amount of about 10 wt% to about 95 wt%, for example, about 20 wt% to about 90 wt%, based on 100 wt% of the total aromatic vinyl copolymer resin. Within this range, the recycled thermoplastic resin composition can have good impact resistance, fluidity, and the like.

In some embodiments, the monomer copolymerizable with the aromatic vinyl monomer may comprise at least one of a vinyl cyanide monomer and an alkyl (meth)acrylic monomer. For example, the monomer copolymerizable with the aromatic vinyl monomer may comprise a vinyl cyanide monomer or may comprise a vinyl cyanide monomer and an alkyl (meth)acrylic monomer.

In some embodiments, the vinyl cyanide monomer may comprise, for example, acrylonitrile, methacrylonitrile, ethacrylonitrile, phenyl acrylonitrile, α-chloroacrylonitrile, fumaronitrile, and the like. These may be used alone or as a mixture thereof. For example, the vinyl cyanide monomer may comprise, for example, acrylonitrile, methacrylonitrile, and the like.

In some embodiments, the alkyl (meth)acrylic monomer may comprise, for example, (meth)acrylic acid and/or C₁ to C₁₀ alkyl (meth)acrylates. These may be used alone or as a mixture thereof. For example, the alkyl (meth)acrylic monomer may comprise methyl methacrylate, methyl acrylate, and the like.

In some embodiments, the monomer copolymerizable with the aromatic vinyl monomer may be present in an amount of about 5 wt% to about 90 wt%, for example, about 10 wt% to about 80 wt%, based on 100 wt% of the aromatic vinyl copolymer resin. Within this range, the recycled thermoplastic resin composition can have good impact resistance, fluidity, and the like.

In some embodiments, the aromatic vinyl copolymer resin may have a weight average molecular weight (Mw) of about 10,000 g/mol to about 300,000 g/mol, for example, about 15,000 g/mol to about 150,000 g/mol, as measured by gel permeation chromatography (GPC). Within this range, the recycled thermoplastic resin composition can have good mechanical strength, moldability, and the like.

In some embodiments, the aromatic vinyl copolymer resin may be present in an amount of about 20 wt% to about 80 wt%, for example, about 25 wt% to about 75 wt%, based on 100 wt% of the rubber-modified aromatic vinyl copolymer resin. Within this range, the recycled thermoplastic resin composition can have good fluidity, chemical resistance, and the like.

In some embodiments, the rubber-modified aromatic vinyl copolymer resin may be present in an amount of about 0.5 parts by weight to about 20 parts by weight, for example, about 1 part by weight to about 15 parts by weight, relative to about 100 parts by weight of the recycled thermoplastic resin. If the content of the rubber-modified aromatic vinyl copolymer resin is less than about 0.5 parts by weight, the recycled thermoplastic resin composition can suffer from deterioration in impact resistance, and if the content of the rubber-modified aromatic vinyl copolymer resin exceeds about 20 parts by weight, the recycled thermoplastic resin composition can suffer from deterioration in flame retardancy, heat resistance, and the like.

### (C) Phosphorus flame retardant

The phosphorus flame retardant according to one embodiment of the present invention serves to improve impact resistance, fluidity, flame retardancy, thermal stability, external appearance, heat resistance, chemical resistance, and property balance of the recycled thermoplastic resin composition, when applied to the recycled thermoplastic resin together with the rubber-modified aromatic vinyl copolymer resin and the epoxy ester compound, and may comprise a phosphorus flame retardant used in typical thermoplastic resin compositions. For example, the phosphorus flame retardant may comprise a phosphate compound, a phosphonate compound, a phosphinate compound, a phosphine oxide compound, a phosphazene compound, and metal salts thereof. These may be used alone or as a mixture thereof

In some embodiments, the phosphorus flame retardant may comprise an aromatic phosphate ester compound. The aromatic phosphate ester compound comprises, for example, diaryl phosphates, such as diphenyl phosphate, triphenyl phosphate, tricresyl phosphate, trixylenyl phosphate, tris(2,6-dimethylphenyl)phosphate, tris(2,4,6-trimethylphenyl)phosphate, tris(2,4-di-tert-butylphenyl)phosphate, tris(2,6-dimethylphenyl)phosphate, bisphenol-A bis(diphenylphosphate), resorcinol bis(diphenylphosphate), resorcinol bis[bis(2,6-dimethylphenyl)phosphate], resorcinol bis[bis(2,4-(di-tert-butylphenyl)phosphate], hydroquinone bis[bis(2,6-dimethylphenyl)phosphate], hydroquinone bis[bis(2,4-di-tert-butylphenyl)phosphate], and the like, without being limited thereto. These may be used alone or as a mixture thereof. Furthermore, the aromatic phosphate ester compound may be an oligomer type bisphenol-A diphosphate or the like.

In some embodiments, the phosphorus flame retardant may be present in an amount of about 10 parts by weight to about 30 parts by weight, for example, about 12 parts by weight to about 22 parts by weight, relative to about 100 parts by weight of the recycled thermoplastic resin. If the content of the phosphorus flame retardant is less than about 10 parts by weight relative to about 100 parts by weight of the recycled thermoplastic resin, the recycled thermoplastic resin composition can suffer from deterioration in fluidity, flame retardancy, and the like, and if the content of the phosphorus flame retardant exceeds about 30 parts by weight, the recycled thermoplastic resin composition can suffer from deterioration in impact resistance, productivity (melt flow index spike), heat resistance, chemical resistance, and the like.

### (D) Epoxy ester compound

The epoxy ester compound containing an ester group and an epoxy group according to one embodiment of the present invention serves to improve impact resistance, fluidity, flame retardancy, thermal stability, external appearance, heat resistance, chemical resistance, and the like of the recycled thermoplastic resin composition, when applied to the recycled thermoplastic resin together with the rubber-modified aromatic vinyl copolymer resin and the phosphorus flame retardant, and may comprise, for example, a compound represented by Formula 1.

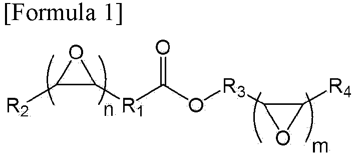

In Formula 1, R₁ and R₃ are each independently a C₁ to C₁₀ hydrocarbon group, R₂ and R₄ are each independently a hydrogen atom or a C₁ to C₁₀ hydrocarbon group, m and n are 0 or 1, and m+n is 1 or 2. Here, R₁ and R₂ and R₃ and R₄ may be linked to each other to form a ring.

In some embodiments, the epoxy ester compound containing an ester group and an epoxy group may comprise compounds represented by Formula 1a to 1c without being limited thereto.

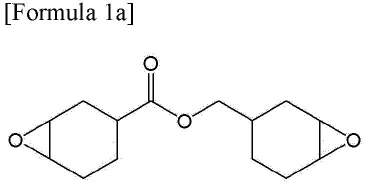

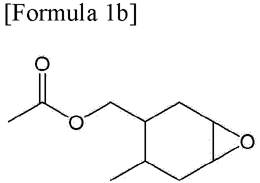

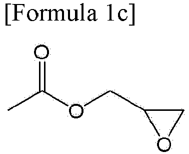

In some embodiments, the epoxy ester compound may be present in an amount of about 0.1 parts by weight to about 1 part by weight, for example, about 0.2 parts by weight to about 0.9 parts by weight, relative to about 100 parts by weight of the recycled thermoplastic resin. If the content of the epoxy ester compound is less than about 0.1 parts by weight relative to about 100 parts by weight of the recycled thermoplastic resin, the recycled thermoplastic resin composition can suffer from deterioration in thermal stability, external appearance, and the like, and if the content of the epoxy ester compound exceeds about 1 part by weight, the recycled thermoplastic resin composition can suffer from deterioration in impact resistance, flame retardancy, thermal stability, and the like.

The recycled thermoplastic resin composition according to one embodiment of the present invention may further comprise additives used in typical thermoplastic resin compositions. The additives may comprise antioxidants, anti-dripping agents, lubricants, release agents, nucleating agents, antistatic agents, stabilizers, pigments, dyes, mixtures thereof, and the like, without being limited thereto. The additives may be present in an amount of about 0.001 parts by weight to about 40 parts by weight, for example, about 0.1 parts by weight to about 10 parts by weight, relative to about 100 parts by weight of the recycled thermoplastic resin.

The recycled thermoplastic resin composition according to one embodiment of the present invention may be prepared in pellet form by mixing the aforementioned components, followed by melt extrusion at about 220°C to about 300°C, for example, about 230°C to about 270°C, using a typical twin-screw extruder.

In some embodiments, the recycled thermoplastic resin composition may have a notched Izod impact strength of about 5 kgf·cm/cm to about 40 kgf·cm/cm, for example, about 5 kgf·cm/cm to about 35 kgf·cm/cm, as measured on a 1/8" thick specimen in accordance with ASTM D256.

In some embodiments, the recycled thermoplastic resin composition may have a melt-flow index (MI) of about 10 g/10 min to about 45 g/10 min, for example, about 11 g/10 min to about 40 g/10 min, as measured at 260°C under a load of 2.16 kgf in accordance with ASTM D1238.

In some embodiments, the recycled thermoplastic resin composition may have a flame retardancy of V-0 or higher, as measured on a 1.5 mm thick specimen by a UL-94 vertical test method.

In some embodiments, the recycled thermoplastic resin composition may have a glass plate weight gain of about 0.01% to about 0.5%, for example, about 0.01 to about 0.4%, as calculated according to Equation 1, after 2 g of a specimen prepared in pellet form of the recycled thermoplastic resin composition is placed in a glass petri dish having a diameter of 80 mm and the top of the glass petri dish is covered with a glass plate, followed by heating the glass petri dish on a hot plate at 270°C for 2 hours. Glass plate weight gain (%) = (glass plate weight after heating for 2 hours - initial glass plate weight) × 100

In some embodiments, the recycled thermoplastic resin composition may have a Vicat softening temperature (VST) of about 80°C to about 120°C, for example, about 83°C to about 110°C, as measured in accordance with the ISO 306 evaluation method (B/50).

A molded article according to the present invention is produced from the recycled thermoplastic resin composition as set forth above. The recycled thermoplastic resin composition may be prepared in pellet form. The prepared pellets may be produced into various molded articles (products) by various molding methods, such as injection molding, extrusion, vacuum molding, casting, and the like. These molding methods are well known to those skilled in the art to which the present invention pertains. The molded article has good properties in terms of impact resistance, fluidity, flame retardancy, thermal stability, external appearance, heat resistance, chemical resistance, property balance therebetween, and the like through application of a high content of recycled raw materials, and is thus useful as exterior materials for electrical and electronic products, such as IT electronic devices and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.
(A) Recycled thermoplastic resin
   (A1) Recycled polycarbonate resin
   (A1-1) A recycled polycarbonate resin (PCM PC, manufacturer: Ningbo Topcentral, product name: PC-T105A) collected from sheets, water bottles, and the like was used.
   (A1-2) A recycled polycarbonate resin collected from IT electronics (ITE-PCM PC manufacturer: Ningbo Topcentral, product name: PC-IT3020BTL) was used.
   (A2) Recycled polyester resin
      Recycled polyethylene terephthalate (OBP PET, manufacturer: Lavergne, product name: VYPET VNT-108 HS) recovered from within 50 km of a coastline was used.
(B) Rubber-modified aromatic vinyl copolymer resin
   A mixture of (B1) 30 wt% of a rubber-modified aromatic vinyl graft copolymer and (B2) 70 wt% of an aromatic vinyl copolymer resin was used.
   (B1) A rubber-modified vinyl graft copolymer (g-MBS, manufacturer: Arkema, product name: Arkema E920) prepared by graft copolymerization of a monomer mixture comprising styrene and methyl methacrylate to butadiene rubbers having an average particle size of 0.15 µm was used.
   (B2) A SAN resin (weight average molecular weight: about 90,000 g/mol) polymerized from a mixture of 75 wt% of styrene and 25 wt% of acrylonitrile was used.
(C) Phosphorus flame retardant
   Oligomer type bisphenol-A diphosphate (bisphenol-A diphosphate, manufacturer: Yoke Chemical, product name: YOKE BDP) was used.
(D) Epoxy ester compound containing an ester group and an epoxy group

A compound represented by Formula 1a was used.

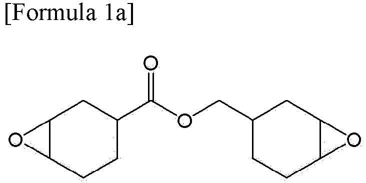

### Examples 1 to 12 and Comparative Examples 1 to 8

The aforementioned components were mixed in amounts as listed in Tables 1, 2, and 3, followed by extrusion at 250°C, thereby preparing a thermoplastic resin composition in pellet form. Here, extrusion was performed using a twin-screw extruder (L/D: 44, diameter: 45 mm). The prepared pellets were dried at about 80°C for about 4 hours or more and then subjected to injection molding using a 6 oz. injection machine (molding temperature: about 270°C, mold temperature: about 120°C), thereby preparing specimens. The prepared specimens were evaluated as to the following properties and results are shown in Tables 1, 2, and 3.

### Property evaluation

(1) Notched Izod impact strength (unit: kgf·cm/cm): Notched Izod impact strength was measured on a 1/8" thick specimen in accordance with ASTM D256.
(2) Melt-flow index (unit: g/10 min): Melt-flow Index (MI) was measured at 260°C under a load of 2.16 kgf in accordance with ASTM D1238.
(3) Flame Retardancy: Flame retardancy was measured on a 1.5 mm thick specimen by the UL-94 vertical test method.
(4) Thermal stability and external appearance: 2 g of a specimen prepared in pellet form was placed in a glass petri dish having a diameter of 80 mm and the top of the glass petri dish was covered with a glass plate, followed by heating the glass petri dish on a hot plate at 270°C for 2 hours. Thereafter, a glass plate weight gain (gas generation amount, unit: %) was calculated according to Equation 1. Glass plate weight gain (%) = (glass plate weight after heating for 2 hours - Initial glass plate weight) × 100
(5) Heat resistance: Vicat softening temperature (VST, unit: °C) was measured in accordance with the ISO 306 method (B/50).
(6) Chemical resistance: 0.5 mL of liquid extracted from a cleaning tissue (manufacturer: PDI, product name: Super P Sani-cloth AFIII) was deposited onto ten 1/8" thick Type I tensile specimens prepared in accordance with ASTM D638, which in turn were left in a 1.0% strain curvature jig for 1 hour, and the number of specimens having cracks was counted.

**[Table 1]**

| | Example | | | | | |
|---|---|---|---|---|---|---|
| | 1 | 2 | 3 | 4 | 5 | 6 |
| (A1-1) (wt%) | 54.3 | 53.3 | 48.6 | 56 | - | 93.3 |
| (A1-2) (wt%) | 40.7 | 40 | 36.4 | 37.3 | 93.3 | - |
| (A2) (wt%) | 5 | 6.7 | 15 | 6.7 | 6.7 | 6.7 |
| (B) (parts by weight) | 10 | 10 | 10 | 10 | 10 | 10 |
| (C) (parts by weight) | 17 | 17 | 17 | 17 | 17 | 17 |
| (D) (parts by weight) | 0.5 | 0.5 | 0.5 | 0.5 | 0.5 | 0.5 |
| Notched Izod impact strength (kgf·cm/cm) | 25 | 15 | 6 | 13 | 5 | 8 |
| Melt-flow index (g/10 min) | 16 | 22 | 40 | 20 | 17 | 18 |
| Flame retardancy | V-0 | V-0 | V-0 | V-0 | V-0 | V-0 |
| Glass plate weight gain (%) | 0.03 | 0.05 | 0.4 | 0.1 | 0.1 | 0.1 |
| VST (°C) | 100 | 96 | 88 | 95 | 93 | 93 |
| Chemical resistance (pcs) | 2 | 2 | 0 | 2 | 2 | 2 |

| | | | | | | |
|---|---|---|---|---|---|---|
| * Parts by weight: Relative to about 100 parts by weight of (A) recycled thermoplastic resin | | | | | | |

**[Table 2]**

| | Example | | | | | |
|---|---|---|---|---|---|---|
| | 7 | 8 | 9 | 10 | 11 | 12 |
| (A1-1) (wt%) | 53.3 | 53.3 | 53.3 | 53.3 | 53.3 | 53.3 |
| (A1-2) (wt%) | 40 | 40 | 40 | 40 | 40 | 40 |
| (A2) (wt%) | 6.7 | 6.7 | 6.7 | 6.7 | 6.7 | 6.7 |
| (B) (parts by weight) | 1 | 15 | 10 | 10 | 10 | 10 |
| (C) (parts by weight) | 17 | 17 | 12 | 22 | 17 | 17 |
| (D) (parts by weight) | 0.5 | 0.5 | 0.5 | 0.5 | 0.2 | 0.9 |
| Notched Izod impact strength (kgf·cm/cm) | 10 | 6 | 10 | 7 | 15 | 9 |
| Melt-flow index (g/10 min) | 15 | 35 | 12 | 36 | 21 | 24 |
| Flame retardancy | V-0 | V-0 | V-0 | V-0 | V-0 | V-0 |
| Glass plate weight gain (%) | 0.05 | 0.3 | 0.15 | 0.2 | 0.1 | 0.01 |
| VST (°C) | 102 | 88 | 108 | 84 | 96 | 94 |
| Chemical resistance (pcs) | 2 | 2 | 2 | 2 | 3 | 0 |

| | | | | | | |
|---|---|---|---|---|---|---|
| * Parts by weight: Relative to about 100 parts by weight of (A) recycled thermoplastic resin | | | | | | |

**[Table 3]**

| | Comparison example | | | | | | | |
|---|---|---|---|---|---|---|---|---|
| | 1 | 2 | 3 | 4 | 5 | 6 | 7 | 8 |
| (A1-1) (wt%) | 56.9 | 45.1 | 53.3 | 53.3 | 53.3 | 53.3 | 53.3 | 53.3 |
| (A1-2) (wt%) | 42.6 | 33.9 | 40 | 40 | 40 | 40 | 40 | 40 |
| (A2) (wt%) | 0.5 | 21 | 6.7 | 6.7 | 6.7 | 6.7 | 6.7 | 6.7 |
| (B) (parts by weight) | 10 | 10 | 0.1 | 25 | 10 | 10 | 10 | 10 |
| (C) (parts by weight) | 17 | 17 | 17 | 17 | 5 | 35 | 17 | 17 |
| (D) (parts by weight) | 0.5 | 0.5 | 0.5 | 0.5 | 0.5 | 0.5 | 0.05 | 1.5 |
| Notched Izod impact strength (kgf·cm/cm) | 11 | 4 | 4 | 40 | 15 | 4 | 15 | 3 |
| Melt-flow index (g/10 min) | 16 | 46 | 35 | 47 | 8 | 75 | 20 | 48 |
| Flame retardancy | V-0 | V-2 | V-0 | Fail | V-2 | V-0 | V-0 | V-2 |
| Glass plate weight gain (%) | 0.05 | 0.3 | 0.1 | 0.4 | 0.1 | 0.35 | 0.6 | 0.01 |
| VST (°C) | 105 | 83 | 110 | 78 | 118 | 60 | 96 | 94 |
| Chemical resistance (pcs) | 5 | 0 | 2 | 1 | 2 | 6 | 5 | 0 |

| | | | | | | | | |
|---|---|---|---|---|---|---|---|---|
| * Parts by weight: Relative to about 100 parts by weight of (A) recycled thermoplastic resin | | | | | | | | |

From the above results, it could be seen that the recycled thermoplastic resin compositions according to the present invention were environmentally friendly by adopting recycled raw materials and had good properties in terms of impact resistance (notched Izod impact strength), fluidity (melt-flow index), flame retardancy (flame retardancy), thermal stability and external appearance (glass plate weight gain), heat resistance (VST), chemical resistance, property balance therebetween, and the like.

Conversely, it could be seen that the thermoplastic resin composition of Comparative Example 1 prepared using an excess of the recycled polycarbonate resin and an insufficient amount of the recycled polyester resin suffered from deterioration in chemical resistance and the like, and the thermoplastic resin composition of Comparative Example 2 prepared using an insufficient amount of the recycled polycarbonate resin and an excess of the recycled polyester resin suffered from deterioration in impact resistance, flame retardancy, and the like. It could be seen that the thermoplastic resin composition of Comparative Example 3 prepared using an insufficient amount of the rubber-modified aromatic vinyl copolymer resin suffered from deterioration in impact resistance and the like, and the thermoplastic resin composition of Comparative Example 4 prepared using an excess of the rubber-modified aromatic vinyl copolymer resin suffered from deterioration in flame resistance, heat resistance, and the like. It could be seen that the thermoplastic resin composition of Comparative Example 5 prepared using an insufficient amount of the phosphorus flame retardant suffered from deterioration in fluidity and flame retardancy, and the thermoplastic resin composition of Comparative Example 6 prepared using an excess of the phosphorus flame retardant suffered from deterioration in impact resistance, heat resistance, chemical resistance, and the like, and deterioration in productivity caused by rapid increase in melt flow index. **In** addition, it could be seen that the thermoplastic resin composition of Comparative Example 7 prepared using an insufficient amount of the epoxy ester compound suffered from deterioration in thermal stability and external appearance, and the thermoplastic resin composition of Comparative Example 8 prepared using an excess of the epoxy ester compound suffered from deterioration in impact resistance and flame retardancy.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A recycled thermoplastic resin composition comprising:
about 100 parts by weight of a recycled thermoplastic resin comprising about 80 wt% to about 99 wt% of a recycled polycarbonate resin and about 1 wt% to about 20 wt% of a recycled polyester resin recovered from within 50 km of a coastline;
about 0.5 parts by weight to about 20 parts by weight of a rubber-modified aromatic vinyl copolymer resin;
about 10 parts by weight to about 30 parts by weight of a phosphorus flame retardant; and
about 0.1 parts by weight to about 1 part by weight of an epoxy ester compound containing an ester group and an epoxy group.

2. The recycled thermoplastic resin composition according to claim 1, wherein the recycled polycarbonate resin comprises about 30 wt% or more of a recycled polycarbonate resin recovered from IT electronics (ITE-PCM PC) based on 100 wt% of the total recycled polycarbonate resin.

3. The recycled thermoplastic resin composition according to claim 1 or 2, wherein the recycled polycarbonate resin contains about 0.01 wt% to about 0.5 wt% of metallic minerals.

4. The recycled thermoplastic resin composition according to any one of claims 1 to 3, wherein the recycled polyester resin comprises at least one of ocean bound plastic (OBP) polyethylene terephthalate, OBP polybutylene terephthalate, and OBP polycyclohexylenedimethylene terephthalate.

5. The recycled thermoplastic resin composition according to any one of claims 1 to 4, wherein the rubber-modified aromatic vinyl copolymer resin comprises a rubber-modified vinyl graft copolymer and an aromatic vinyl copolymer resin.

6. The recycled thermoplastic resin composition according to claim 5, wherein the rubber-modified vinyl graft copolymer is prepared through graft polymerization of a monomer mixture comprising an aromatic vinyl monomer and a vinyl cyanide monomer to a rubber polymer.

7. The recycled thermoplastic resin composition according to any one of claims 1 to 6, wherein the phosphorus flame retardant comprises at least one of a phosphate compound, a phosphonate compound, a phosphinate compound, a phosphine oxide compound, and a phosphazene compound.

8. The recycled thermoplastic resin composition according to any one of claims 1 to 7, wherein the epoxy ester compound containing an ester group and an epoxy group comprises a compound represented by Formula 1: 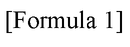 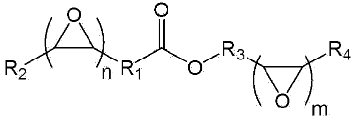 where R₁ and R₃ are each independently a C₁ C₁₀ hydrocarbon group, R₂ and R₄ are each independently a hydrogen atom or a C₁ C₁₀ hydrocarbon group, m and n are 0 or 1, and m+n is 1 or 2. Here, R₁ and R₂ and R₃ and R₄ are linked to each other to form a ring.

9. The recycled thermoplastic resin composition according to any one of claims 1 to 8, wherein the recycled thermoplastic resin composition has a notched Izod impact strength of about 5 kgf·cm/cm to about 40 kgf·cm/cm, as measured on a 1/8" thick specimen in accordance with ASTM D256.

10. The recycled thermoplastic resin composition according to any one of claims 1 to 9, wherein the recycled thermoplastic resin composition has a melt-flow index (MI) of about 10 g/10 min to about 45 g/10 min, as measured at 260°C under a load of 2.16 kgf in accordance with ASTM D1238.

11. The recycled thermoplastic resin composition according to any one of claims 1 to 10, wherein the recycled thermoplastic resin composition has a flame retardancy of V-0 or higher, as measured on a 1.5 mm thick specimen by a UL-94 vertical test method.

12. The recycled thermoplastic resin composition according to any one of claims 1 to 11, wherein the recycled thermoplastic resin composition has a glass plate weight gain of about 0.01% to about 0.5%, as calculated according to Equation 1, after 2 g of a specimen prepared in pellet form of the recycled thermoplastic resin composition is placed in a glass petri dish having a diameter of 80 mm and the top of the glass petri dish is covered with a glass plate, followed by heating the glass petri dish on a hot plate at 270°C for 2 hours. Glass plate weight gain (%) = (glass plate weight after heating for 2 hours - initial glass plate weight) × 100

13. The recycled thermoplastic resin composition according to any one of claims 1 to 12, wherein the recycled thermoplastic resin composition has a Vicat softening temperature (VST) of about 80°C to about 120°C, as measured in accordance with the ISO 306 evaluation method (B/50).

14. A molded article produced from the recycled thermoplastic resin composition according to any one of claims 1 to 13.
